(19) Europäisches Patentamt
European Patent Office
Office européen des brevets

(11) EP 2 074 183 B1

(12) **EUROPEAN PATENT SPECIFICATION**

(45) Date of publication and mention of the grant of the patent:
**04.01.2012 Bulletin 2012/01**

(21) Application number: **07852853.6**

(22) Date of filing: **19.10.2007**

(51) Int Cl.:
***C09D 151/00*** (2006.01) ***C08F 265/04*** (2006.01)
***C08F 265/06*** (2006.01) ***C08K 3/34*** (2006.01)
***C08K 3/36*** (2006.01) ***C08L 51/00*** (2006.01)

(86) International application number:
**PCT/US2007/022300**

(87) International publication number:
**WO 2008/051462 (02.05.2008 Gazette 2008/18)**

(54) **AQUEOUS ADDITIVE COMPOSITIONS CONTAINING LAYERED SILICATE**

WÄSSRIGE ZUSATZSTOFFZUSAMMENSETZUNGEN MIT PHYLLOSILICAT

COMPOSITIONS AQUEUSES D'ADDITIFS CONTENANT DU SILICATE STRATIFIE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.10.2006 US 852790 P**

(43) Date of publication of application:
**01.07.2009 Bulletin 2009/27**

(73) Proprietor: **E.I. DU PONT DE NEMOURS AND COMPANY**
**Wilmington, DE 19898 (US)**

(72) Inventors:
- **WIGGERSHAUS, Stefan**
**58332 Schwelm (DE)**
- **BRUYLANTS, Paul P.**
**3191 Hever (BE)**
- **TESSARI, Frank**
**42337 Wuppertal (DE)**
- **BARRERE, Matthieu**
**80639 München (DE)**
- **HOUZE, Eric C.**
**Mullica Hill, NJ 08062 (US)**

(74) Representative: **DuPont Performance Coatings**
**Biering/Blum/Kimpel**
**Christbusch 25**
**42285 Wuppertal (DE)**

(56) References cited:
**WO-A-2006/118974**
**US-A- 5 185 387**
**US-A- 5 502 101**
**US-B1- 6 737 468**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 074 183 B1

## Description

### Field of Invention

The invention relates to aqueous additive compositions containing layered silicate for production of water-based coating compositions and to water-based coating compositions containing the additive compositions. The additive compositions containing layered silicate may in particular readily be used for preparing color-imparting and/or special effect-imparting water-borne base coat coating compositions in vehicle coating.

### Description of Related Art

In vehicle coating applications too, increasing use is being made of water-based coating compositions with a low content of volatile organic compounds for environmental reasons, with the pace being set by corresponding statutory measures. Water-dilutable coating compositions, in particular those which are applied by spraying in vehicle coating, must exhibit specific rheological properties. It is known to use layered silicates to control the rheological properties of water-based coating compositions. The layered silicates are incorporated into water-dilutable coating compositions for example by means of dispersions which are produced from a layered silicate modified with a protective colloid and water. It is accordingly known, for example from EP 281 936, to incorporate layered silicates into water-based coating compositions in the form of aqueous dispersions of layered silicates and propylene oxide as the protective colloid.

It is furthermore known from EP 730 626 to produce a pigmented water-based coating composition from a paint component containing pigment and binder and a rheological component containing neither pigment nor binder which consists of water and layered silicate. However, the use of known layered silicate dispersions or layered silicate components leads to stability problems in the water-based coating composition or, if they are added to the water-based coating composition immediately prior to use, to applicational disadvantages, such as poor filtrability and sprayability of the ready-to-apply coatings or also speckling in the wet coating film.

It is furthermore known from EP 1152041 to produce a pigmented water-based coating composition by mixing a base component containing pigment and binder and a rheological component which contains water, layered silicate and a polyurethane resin. However, this layered silicate composition and the water-based coating compositions containing it also exhibit inadequate storage stability.

US 5,185,387 discloses a composition containing an aqueous acrylic latex, a non-ionic polyurethane thickener and layered silicate. The composition contains the aqueous acrylic latex and the non-ionic polyurethane thickener in ratio by weight of 162 : 1 (based on resin solids). The composition does not contain water-dilutable polyurethane resins.

US 5,502,101 discloses basecoats comprising a water-dilutable polyacrylate resin, a water-dilutable polyurethane resin and a layered silicate thickener. The water-dilutable polyacrylate resin is prepared by solution polymerization in the organic phase, neutralized and transferred into the aqueous phase. The polyacrylate resin does not contain polyunsaturated monomers. Those basecoat compositions lead to coatings with insufficient water resistance.

There is accordingly still a requirement for a solution which permits the use of layered silicates for rheological control in water-based coating compositions, but which does not exhibit the above-stated disadvantages with regard to stability, filtrability and sprayability. The water-based coating compositions containing the layered silicates, in particular color-imparting and/or special effect-imparting water-borne base coat coating compositions should be stable in storage, be readily filtrable in the ready-to-apply state and have good spray application properties. The resultant coatings should exhibit good wet adhesion and special effect water-borne base coats should exhibit good development of the special effect (flop effect).

### Summary of the Invention

The invention relates to aqueous additive compositions for production of water-based coating compositions, the aqueous additive compositions comprising:

I) at least one layered silicate
II) at least one water-dilutable polyurethane resin and
III) at least one aqueous (meth)acrylic latex, wherein the aqueous (meth)acrylic latex is prepared by multistage emulsion polymerization in the aqueous phase, comprising the steps:

1) free-radical polymerization of a mixture A of olefinically unsaturated, free-radically polymerizable monomers, optionally comprising at least one monomer with at least one acid group and at least one olefinically polyunsaturated monomer, in the aqueous phase,
2) free-radical polymerization of at least one mixture B of olefinically unsaturated, free-radically polymerizable

monomers, optionally comprising at least one monomer with at least one acid group and at least one olefinically polyunsaturated monomer in the presence of the product obtained in process step 1),

wherein the ratio by weight of mixture A to the at least one mixture B is from 15:85 to 85:15 and wherein mixture A or the at least one mixture B or both mixture A and the at least one mixture B comprise the at least one monomer with at least one acid group and wherein mixture A or the at least one mixture B or both mixture A and the at least one mixture B comprise the at least one olefinically polyunsaturated monomer, wherein the at least one water-dilutable polyurethane resin II and the at least one aqueous (meth)acrylic latex III are present in a ratio by weight of polyurethane to (meth) acrylic latex of 1 : 9 to 9:1, wherein the ratio by weight is based on resin solids, and wherein the aqueous additive composition contains 65.0 to 91.4 wt.% of water, based on the total amount of the aqueous additive composition.

Preferred aqueous additive compositions comprising:

I) at least one layered silicate
II) at least one water-dilutable polyurethane resin and
III) at least one aqueous (meth)acrylic latex, wherein the aqueous (meth)acrylic latex is prepared by multistage emulsion polymerization in the aqueous phase, comprising the successive steps:

1) free-radical polymerization of a mixture A of olefinically unsaturated, free-radically polymerizable monomers, comprising at least one monomer with at least one acid group in a proportion corresponding to an acid value of mixture A of 10 to 100 mg of KOH/g and optionally comprising at least one olefinically polyunsaturated monomer in the aqueous phase,

2) 2) free-radical polymerization of at least one mixture B of olefinically unsaturated, free-radically polymerizable monomers, comprising at least one monomer with at least one acid group in a proportion corresponding to an acid value of mixture B or each of the mixtures B of 0 to below 5 mg of KOH/g and optionally comprising at least one olefinically polyunsaturated monomer, in the presence of the product obtained in process step 2),

wherein the ratio by weight of mixture A to the at least one mixture B is from 15:85 to 85:15 and wherein mixture A or the at least one mixture B or both mixture A and the at least one mixture B comprise the at least one olefinically polyunsaturated monomer, preferably in a proportion of 0.5 to 5 wt.%, relative to mixture A or mixture B or each of the mixtures B, wherein the at least one water-dilutable polyurethane resin II and the at least one aqueous (meth) acrylic latex III are present in a ratio by weight of polyurethane to (meth)acrylic latex of 1 : 9 to 9:1, wherein the ratio by weight is based on resin solids, and wherein the aqueous additive composition contains 65.0 to 91.4 wt.% of water, based on the total amount of the aqueous additive composition.

Preferably the acid groups of the polymer formed in process step 1) are neutralized, wherein most preferred neutralization is not begun until at least 90 wt.% of the monomers of mixture A have been polymerized to completion.

Most preferred aqueous additive compositions comprising:

I) at least one layered silicate
II) at least one water-dilutable polyurethane resin and
III) at least one aqueous (meth)acrylic latex, wherein the aqueous (meth)acrylic latex is prepared by multistage emulsion polymerization in the aqueous phase, comprising the successive steps:

1) free-radical polymerization of a mixture A of olefinically unsaturated, free-radically polymerizable monomers, comprising at least one monomer with at least one acid group in a proportion corresponding to an acid value of mixture A of 10 to 100 mg of KOH/g and 0.5 to 5 wt.% of at least one olefinically polyunsaturated monomer, in the aqueous phase,
1a) neutralization of acid groups of the polymer formed in process step 1) and
2) free-radical polymerization of at least one mixture B of olefinically unsaturated, free-radically polymerizable monomers, comprising at least one monomer with at least one acid group in a proportion corresponding to an acid value of mixture B or each of the mixtures B of 0 to below 5 mg of KOH/g, at least one monomer with at least one hydroxyl group in a proportion corresponding to a hydroxyl value of mixture B or each of the mixtures B of 0 to below 5 mg of KOH/g and at least one olefinically polyunsaturated monomer in a proportion of 0.5 to 5 wt.%, relative to mixture B or each of the mixtures B, in the presence of the product obtained in process step1a),

wherein the ratio by weight of mixture A to the at least one mixture B is from 15:85 to 85:15 and wherein neutralization is not begun in process step1a) until at least 90 wt.% of the monomers of mixture A have been polymerized to completion.

The at least one water-dilutable polyurethane resin II and the at least one aqueous (meth)acrylic latex III are present in a ratio by weight of polyurethane to (meth)acrylic latex of preferably 1 : 4 to 4 : 1 and most preferred of 1 : 2 to 2 :1, wherein the ration by weight is based on resin solids.

The invention also relates to water-based coating compositions which contain the above-defined aqueous additive compositions and to the use of the above-defined aqueous additive compositions for production of water-based coating compositions and to a process for the production of water-based coating compositions containing layered silicate.

## Detailed Description of the Embodiments

The invention will be explained in greater detail below.

It will be appreciated that certain features of the invention which are, for clarity, described above and below in the context of separate embodiments may also be provided in combination in a single embodiment. Conversely, various features of the invention that are, for brevity, described in the context of a single embodiment may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both preceded by the word "about". Thus, slight variations above and below the stated ranges can be used to achieve substantially the same results as values within the ranges. Moreover, in the disclosure of these ranges, a continuous range is intended, covering every value between the minimum and maximum values, including the minimum and maximum end points of the range.

By "aqueous (meth)acrylic latex", it is meant water-dispersed (meth)acrylic emulsion polymer, i.e. water-dispersed polymer particles prepared by emulsion polymerizing free-radically polymerizable olefinically unsaturated (meth) acrylic monomers optionally in combination with other free-radically polymerizable olefinically unsaturated monomers.

The term (meth)acrylic as used here and hereinafter should be taken to mean methacrylic and/or acrylic. Wt. % means percent by weight.

Unless stated otherwise, all molecular weights (both number and weight average molecular weight) referred to herein are determined by GPC (gel permeation chromatographie) using polystyrene as the standard and tetrahydrofurane as the liquid phase.

Water-based coating compositions are coating compositions, wherein water is used as solvent or thinner when preparing and/or applying the coating composition. Usually, water-based coating compositions contain 30 to 90% by weight of water, based on the total amount of the coating composition and optionally, up to 20% by weight, preferably, below 15% by weight of organic solvents, based on the total amount of the coating composition.

The aqueous additive compositions of the present invention are not ready-to-use coating compositions. They can only be used to prepare water-based coating compositions.

The aqueous additive compositions according to the invention preferably comprise:

> 0.1 to 5.0 wt.%, more preferred 0.1 to 2.5 wt.%, most preferred 0.6 to 2.0 wt.% and in particular 0.8 to 1.4 wt.%, of the at least one layered silicate I) (solid) and
>
> 3.0 to 30.0 wt.%, preferably 8.0 to 15.0 wt.% of the at least one water-dilutable polyurethane resin II) and the at least one aqueous (meth)acrylic latex III (sum of polyurethane resin II and (meth)acrylic latex III), wherein the wt.% are relative to the total quantity of the aqueous additive composition and the wt.% of polyurethane II) and (meth) acrylic latex III) are based on resin solids.

The aqueous additive compositions according to the invention contain at least one layered silicate. Layered silicates are silicates in which the $SiO_4$ tetrahedrons are linked together in a single plane, i.e. they form a layer lattices. The silicon within the structures may be partially replaced, for example, by aluminum, magnesium, sodium or lithium. Layered silicates I) contained in the aqueous additive composition comprise layered silicates known to the person skilled in the art and conventionally used in connection with coatings. These are for example aluminum-magnesium silicates, sodium-magnesium silicates and sodium-magnesium-lithium silicates with a layered structure. Examples of such layered silicates are layered silicates of the bentonite, smectite, montmorillonite and hectorite type. Naturally occurring layered silicates may be used, but synthetically manufactured layered silicates are preferred. It may be convenient if the layered silicates used are washed grades. Examples of commercially available layered silicates which may be used in aqueous binders are Optigel® or Laponite® (from Rockwood Additives Ltd., UK) or Borchigel® layered silicates (from Borchers, Monheim, Germany).

The aqueous additive compositions of layered silicates also contain at least one water-dilutable polyurethane resin II). Examples of water-dilutable polyurethane resins are those, for example, with a number average molecular mass Mn of 1000 to 500 000 g/mol, preferably 5000 to 300 000 g/mol, an acid value of 10 to 100 mg KOH/g, preferably

of 20 to 80 mg KOH/g, and a hydroxyl value of 0 to 400 mg KOH/g. Appropriate polyurethane resins which may be used are for example prepared by reacting compounds a1) which are reactive with respect to isocyanate groups and polyisocyanates a2) having at least 2 free isocyanate groups per molecule.

Compounds usable as component a1) are polyester polyols, polycarbonate polyols, polyether polyols, polylactone polyols and/or poly(meth)acrylate polyols or the corresponding diols. The polyols and diols may in each case be used individually or in combination with one another.

Polyester polyols, preferably polyester diols, and/or polycarbonate polyols, preferably polycarbonate diols, are preferably used as component a1).

The polyester polyols may be produced in a conventional manner known to the person skilled in the art, for example by polycondensation from organic dicarboxylic acids or the anhydrides thereof and organic polyols. The acid component for the production of the polyester polyols preferably comprises low molecular weight dicarboxylic acids or the anhydrides thereof having 2 to 17, preferably fewer than 16, particularly preferably fewer than 14 carbon atoms per molecule. Suitable dicarboxylic acids are for example phthalic acid, isophthalic acid, alkylisophthalic acid, terephthalic acid, hexahydrophthalic acid, adipic acid, trimethyladipic acid, azelaic acid, sebacic acid, fumaric acid, maleic acid, glutaric acid, succinic acid, itaconic acid and 1,4-cyclohexanedicarboxylic acid. The corresponding anhydrides, where extant, may be used instead of the acids. In order to achieve branching, it is also possible to add proportions of more highly functional carboxylic acids, for example trifunctional carboxylic acids such as trimellitic acid, malic acid and dimethylolpropionic acid.

Polyols usable for the production of the polyester polyols are preferably diols, for example glycols such as ethylene glycol, 1,2-propanediol, 1,2-, 1,3- and 1,4-butanediol, 2-ethylene-1,3-propanediol, 1,6-hexanediol, 1,2- and 1,4-cyclohexanediol, hydrogenated bisphenol A and neopentyl glycol.

The diols may optionally be modified by small quantities of more highly hydric alcohols. Examples of more highly hydric alcohols which may also be used are trimethylolpropane, pentaerythritol, glycerol and hexanetriol. A proportion of chain-terminating, monohydric alcohols may also be used, for example those having 1 to 18 C atoms per molecule, such as propanol, butanol, cyclohexanol, n-hexanol, benzyl alcohol, isodecanol, saturated and unsaturated fatty alcohols.

The components are here reacted in quantity ratios such that the desired OH values of the polyester polyols are obtained. The polyester polyols preferably contain substantially no carboxyl groups. They may, for example, have acid values of <3, preferably of <1. It is, however, also possible for the polyester polyols to contain carboxyl groups, in which case they may, for example, have acid values of 5 to 50 mg of KOH/g. The carboxyl groups may be introduced, for example, by means of di- or trifunctional carboxylic acids, such as for example trimellitic acid, malic acid, and dihydroxymonocarboxylic acids, such as for example dimethylolpropionic acid.

Polycarbonate polyols and in particular polycarbonate diols are also preferred as component a1). The polycarbonate polyols comprise esters of carbonic acid which are obtained by reacting carbonic acid derivatives, for example diphenyl carbonate or phosgene, with polyols, preferably diols. Suitable diols which may be considered are, for example, ethylene glycol, 1,2- and 1,3-propanediol, 1,4- and 1,3-butanediol, 1,6-hexanediol, neopentyl glycol, 2-methyl-1,3-propanediol and 1,4-bishydroxymethylcyclohexane.

Polyether polyols and/or polylactone polyols are also suitable as component a). Polyether polyols which may, for example, be considered are polyether polyols of the following general formula: $H(O-(CHR_1)_n)_m OH$,
in which $R_1$ means hydrogen or a lower alkyl residue (for example $C_1$ to $C_6$ alkyl), optionally with various substituents, n means 2 to 6 and m means 10 to 50. The residues $R_1$ may be identical or different. Examples of polyether polyols are poly(oxytetramethylene) glycols, poly(oxyethylene) glycols and poly(oxypropylene) glycols or mixed block copolymers which contain different oxytetramethylene, oxyethylene and/or oxypropylene units.

The polylactone polyols comprise polyols, preferably diols, which are derived from lactones, preferably from caprolactones. These products are obtained, for example, by reacting an epsilon-caprolactone with a diol. The polylactone polyols are distinguished by repeat polyester moieties which are derived from the lactone. These repeat molecular moieties may, for example, be of the following general formula:

$$-\overset{\overset{\displaystyle O}{\|}}{C} - (CHR_2)_n - CH_2O - ,$$

wherein n is preferably 4 to 6 and $R_2$ is hydrogen, an alkyl residue, a cycloalkyl residue or an alkoxy residue and the total number of carbon atoms in the substituents of the lactone ring does not exceed 12.

Preferably used lactones are the epsilon-caprolactones, in which n has a value of 4. Unsubstituted epsilon-caprolactone is here particularly preferred. The lactones may be used individually or in combination. Diols suitable for reaction with the lactones are, for example, ethylene glycol, 1,3-propanediol, 1,4-butanediol and dimethylolcyclohexane.

In addition to component a1), one or more low molecular weight polyhydric alcohols, preferably difunctional alcohols, with a molecular weight of below 500 g/mol may optionally also be used. Examples of such compounds are ethylene glycol, 1,2- and 1,3-propanediol, 1,3- and 1,4-butanediol, 1,6-hexanediol, 1,8-octanediol, 1,2- and 1,4-cyclohexanediol, dimethylolpropane, neopentyl glycol.

Any desired organic polyisocyanates, preferably diisocyanates, may be used individually or in combination as component a2) for the production of the polyurethane. The polyisocyanates may, for example, be of an aromatic, aliphatic and/or cycloaliphatic nature.. These may also comprise diisocyanates containing ether or ester groups. Examples of suitable diisocyanates are trimethylene diisocyanate, tetramethylene diisocyanate, pentamethylene diisocyanate, hexamethylene diisocyanate, propylene diisocyanate, ethylene diisocyanate, 2,3-dimethylethylene diisocyanae diisocyanate, 2,3-bis(8-isocyanatooctyl)-4-octyl-5-hexylcyclohexane, 3-isocyanatomethyl-1-methylcyclohexyl isocyanate and/or 2,6-diisocyanatomethyl caproate.

It is also possible to use sterically hindered isocyanates with 4 to 25, preferably 6 to 16 C atoms, which contain in alpha position relative to the NCO group one or two linear, branched or cyclic alkyl groups with 1 to 12, preferably 1 to 4 C atoms as a substituent on the parent structure. The parent structure may consist of an aromatic or alicyclic ring or of an aliphatic linear or branched C chain having 1 to 12 C atoms. Examples of these are isophorone diisocyanate, bis(4-isocyanatocyclohexyl)methane, 1,1,6,6-tetramethylhexamethylene diisocyanate, 1,5-dibutylpentamethylene diisocyanate, 3-isocyanatomethyl-1-methylcyclohexyl isocyanate, p- and m-tetramethylxylylene diisocyanate and/or the corresponding hydrogenated homologues.

In order to obtain a sufficient water-dilutability, the polyurethane resins are modified with ionic groups and/or non-ionic hydrophilic groups. Those hydrophilic groups can be introduced by way of low molecular weight compounds a3) which have at least one, preferably more than one, particularly preferably two groups reactive with isocyanate groups and at least one ionic group, group capable of forming ions and/or non-ionic hydrophilic group. Groups capable of forming anions, which may be considered are for example carboxyl, phosphoric acid and sulfonic acid groups. Preferred anionic groups are carboxyl groups. Groups capable of forming cations which may be considered are for example primary, secondary and tertiary amino groups or onium groups, such as quaternary ammonium, phosphonium and/or tertiary sulfonium groups. Anionic groups or groups capable of forming anions are preferred. Preferred non-ionic hydrophilic groups are ethylene oxide groups. Suitable isocyanate-reactive groups are in particular hydroxyl groups and primary and/or secondary amino groups.

Preferred compounds which may be considered as component a3)) are those containing carboxyl and hydroxyl groups. Examples of such compounds are hydroxyalkanecarboxylic acids of the following general formula:

$$(HO)_xQ(COOH)_y$$

in which Q represents a linear or branched hydrocarbon residue with 1 to 12 C atoms and x and y each mean 1 to 3. Examples of such compounds are citric acid and tartaric acid. Carboxylic acids where x = 2 and y = 1 are preferred. A preferred group of dihydroxyalkanoic acids are alpha,alpha-dimethylolalkanoic acids. alpha,alpha-Dimethylolpropionic acid and alpha,alpha-dimethylolbutyric acid are preferred.

Further examples of usable dihydroxyalkanoic acids are dihydroxypropionic acid, dimethylolacetic acid, dihydroxysuccinic acid or dihydroxybenzoic acid. Further compounds usable as component a3) are acids containing amino groups, for example alpha,alpha-diaminovaleric acid, 3,4-diaminobenzoic acid, 2,4-diaminotoluenesulfonic acid and 4,4-diaminodiphenyl ether sulfonic acid. Further compounds usable as component a3) are e.g. difunctional polyethylene oxide dialcohols.

Components a1), a2) and a3) are reacted together in a conventional manner known to the person skilled in the art. The components are here reacted in quantities such that a reaction product with free isocyanate groups or hydroxyl groups is obtained. A NCO-polyurethane prepolymer should preferably has an NCO content of 3.0 to 6.0%, particularly preferably of 3.5 to 5.0%.

The thus obtained polyurethane resins can still be subjected to chain extension to increase the molecular weight. For example NCO-functional polyurethane prepolymers can be reacted with compounds which are reactive with respect to isocyanate groups. Compounds which are reactive with respect to isocyanate groups are in particular compounds with hydroxyl and/or secondary and/or primary amino groups. OH-functional polyurethane prepolymers can be chain extended for example with polyisocyanates

The water-dilutable polyurethane resins include such resins which are in modified form, for example as silicon-modified, (meth)acrylated polyurethane resins or polyurethane/polyurea resins. (Meth)acrylated polyurethane resins can for example be prepared by radically initiated polymerisation of polyurethane macromonomers with carboxyl groups and lateral as well as optionally terminal vinyl groups in the presence of one or more copolymerisable unsaturated monomers.

In order to achieve sufficient water-dilutability of the polyurethane the ionic groups or groups convertible into

ionic groups of the polyurethane are at least partially neutralised. The polyurethane resin preferably contains anionic groups, for example carboxyl groups. The anionic groups are neutralised with bases. Examples of basic neutralising agents are tertiary amines such as trimethylamine, triethylamine, dimethylethylamine, dimethylbutylamine, N-methylmorpholine, dimethylethanolamine , dimethylisopropanolamine and dimethylisopropylamin.

Neutralisation may proceed before or after the reaction of the polyurethane prepolymer with a chain extender. After neutralisation the polyurethane prepolymer or the final polyurethane is converted into the aqueous phase. Neutralisation and conversion into the aqueous phase may, however, also proceed simultaneously. Parallel or in addition the polyurethane may contain hydrophilic non-ionic groups to provide sufficient water-dilutability. If non-ionic hydrophilic groups, e.g. ethylene oxide groups are present, it is preferred that they are present in addition to ionic groups, preferably in addition to anionic groups. In addition thereto, it is possible to obtain water-dilutability via external emulsifiers.

Preferred polyurethanes are based on polyester polyols, polycarbonate polyols or combinations thereof.

The polyurethanes II) to be used in the aqueous additive composition according to the invention are usually used in form of aqueous dispersions, with a solids content of e.g. 30 to 60 wt.-%, preferably 35 to 45 wt.-%

Examples of water-dilutable polyurethane resins which may be used are described in US 5,492,961, US 5,141,987, US 5,556,912, DE-A-41 15 042, US 5,635,559, US 5,691,425, DE-A-42 28 510, US 5,854,337, US 4,489,135.

The layered silicate containing aqueous additive compositions further contain at least one aqueous (meth) acrylic latex III).

The aqueous (meth)acrylic latex III) is produced by a multistage, preferably two-stage emulsion polymerization, i.e. the mixtures A and B of olefinically unsaturated monomers to be free-radically polymerized are polymerized under conventional conditions known to the person skilled in the art of a free-radical polymerization performed in an aqueous emulsion, i.e. using one or more emulsifiers and with the addition of one or more initiators which are thermally dissociable into free radicals. In order to ensure the formation of a crosslinked or even gel structure in the polymer products formed in at least one of the stages of the emulsion polymerization, olefinically polyunsaturated monomers are used and copolymerized.

Examples of olefinically unsaturated, free-radically polymerizable monomers with at least one acid group are in particular olefinically unsaturated monomers containing carboxyl groups, such as, for example, (meth)acrylic, itaconic, crotonic, isocrotonic, aconitic, maleic and fumaric acid, semi-esters of maleic and fumaric acid and carboxyalkyl esters of (meth)acrylic acid, for example, beta-carboxyethyl acrylate and adducts of hydroxyalkyl (meth)acrylates with carboxylic anhydrides, such as, for example, phthalic acid mono-2-(meth)acryloyloxyethyl ester. (Meth)acrylic acid is preferred.

Examples of olefinically polyunsaturated, free-radically polymerizable monomers are divinylbenzene, hexanediol di(meth)acrylate, ethylene and propylene glycol di(meth)acrylate, 1,3- and 1,4-butanediol di(meth)acrylate, vinyl (meth)acrylate, allyl (meth)acrylate, diallyl phthalate, glycerol tri(meth)acrylate, trimethylolpropane tri(meth)acrylate, pentaerythritol tetra(meth)acrylate, di- and tripropylene glycol di(meth)acrylate, hexamethylene bis(meth)acrylamide. Further examples are compounds which may be produced by a condensation or preferably by an addition reaction of complementary compounds, which in each case, in addition to one or more olefinic double bonds, contain one or more further functional groups per molecule. The further functional groups of the individual complementary compounds comprise pairs of mutually complementary reactive groups, in particular groups which are capable of reacting with one another for the purposes of a possible condensation or addition reaction.

Examples of olefinically polyunsaturated, free-radically polymerizable monomers produced by a condensation reaction are reaction products formed from alkoxysilane-functional (meth)acrylic monomers after hydrolysis with elimination of alcohol and formation of siloxane bridges. Further examples are reaction products formed from hydroxyalkyl (meth)acrylates and olefinically unsaturated isocyanates blocked on the isocyanate group, such as isocyanatoalkyl (meth)acrylate or m-isopropenyl-alpha,alpha-dimethylbenzyl isocyanate with elimination of the blocking agent and formation of urethane groups.

Examples of olefinically polyunsaturated, free-radically polymerizable monomers produced by an addition reaction are addition products formed from hydroxyalkyl (meth)acrylates and olefinically unsaturated isocyanates, such as isocyanatoalkyl (meth)acrylate or m-isopropenyl-alpha,alpha-dimethylbenzyl isocyanate with formation of a urethane group or reaction products formed by ring-opening addition of the epoxy group of unsaturated epoxy compounds onto the carboxyl group of an unsaturated acid with formation of an ester group and a hydroxyl group, such as, for example, the addition product formed from glycidyl (meth)acrylate and (meth)acrylic acid.

Apart from the at least one olefinically unsaturated, free-radically polymerizable monomer with at least one acid group and the at least one olefinically polyunsaturated, free-radically polymerizable monomer, mixture A and the at least one mixture B also comprise one or more further olefinically unsaturated, free-radically polymerizable monomers. These may comprise functional groups or they may be non-functionalized and they may also be used in combination.

Examples of olefinically unsaturated, free-radically polymerizable monomers without functional groups usable in mixture A are monovinyl aromatic compounds such as styrene, vinyltoluene; vinyl ethers and vinyl esters, such as vinyl acetate, vinyl versatate; maleic, fumaric, tetrahydrophthalic acid dialkyl esters; but in particular (cyclo)alkyl (meth) acrylates, such as methyl (meth)acrylate, ethyl (meth)acrylate,

propyl (meth)acrylate, butyl (meth)acrylate, isobutyl (meth)acrylate, tert.-butyl (meth)acrylate, hexyl (meth)acrylate, cyclohexyl (meth)acrylate, ethylhexyl (meth)acrylate, decyl (meth)acrylate, dodecyl (meth)acrylate, hexadecyl (meth)acrylate, lauryl (meth)acrylate and isobornyl (meth)acrylate.

Examples of olefinically unsaturated, free-radically polymerizable monomers with functional groups which may be mentioned are in particular olefinically unsaturated monomers with at least one hydroxyl group, such as allyl alcohol, but in particular hydroxyalkyl (meth)acrylates such as, for example, hydroxyethyl (meth)acrylate, and the hydroxypropyl (meth)acrylates, hydroxybutyl (meth)acrylates isomeric with regard to the position of the hydroxyl group. Further examples are glycerol mono(meth)acrylate, adducts of (meth)acrylic acid onto monoepoxides, such as, for example, versatic acid glycidyl ester and adducts of glycidyl (meth)acrylate onto monocarboxylic acids such as, for example, acetic acid or propionic acid.

The duration of the emulsion polymerization (time taken to apportion mixtures A and B into the aqueous initial charge plus the duration of the neutralization operation plus the duration of the post-polymerization phase) is, for example, 1 to 10 hours. The polymerization temperature in the aqueous phase is, for example, 50 to 95°C.

The emulsifier(s) is/are used in a conventional total quantity of, for example, 0.1 to 3 wt.%, relative to the sum of the weights of mixtures A and B and may be initially introduced and/or added as a constituent of the mixtures A and B and/or added in parallel to the apportionment of mixtures A and B. Examples of usable emulsifiers are the conventional cationic, anionic and nonionic emulsifiers usable in the context of emulsion polymerization, such as, for example, cetyltrimethylammonium chloride, benzyldodecyldimethylammonium bromide, sodium dodecyl sulfate, sodium dodecylbenzenesulfonate, polyethylene glycol monolauryl ether. Care must be taken to ensure that cationic and anionic emulsifiers are not used with one another.

The initiator(s) which are thermally dissociable into free radicals (free-radical initiators) are used in a conventional total quantity of, for example, 0.02 to 2 wt.%, relative to the sum of the weights of mixtures A and B and are added contemporaneously to the apportionment of mixtures A and B. The water-soluble free-radical initiators may be added as such, as a constituent of mixtures A and B, but in particular as an aqueous solution. A proportion of the free-radical initiators may, however, be initially introduced and/or added once addition of the monomers is complete. The free-radical initiators are preferably water-soluble. Examples of usable free-radical initiators are hydrogen peroxide, peroxodisulfates such as sodium, potassium and ammonium peroxodisulfate, ammonium salts of 4,4'-azobis(4-cyanopentanoic acid), 2,2'-azobis(2-methyl-N-1,1-bis(hydroxymethyl)ethyl)propionamide, 2,2'-azobis(2-methyl-N-2-hydroxyethyl)propionamide as well as conventional redox initiator systems known to the person skilled in the art, such as hydrogen peroxide/ascorbic acid optionally in combination with catalytic metal salts such as iron, copper or chromium salts.

The monomer mixtures A and B to be free-radically polymerized according to process steps 1) and 2) are apportioned, i.e. added, as is usual in emulsion polymerizations, into an aqueous initial charge, which has generally already been adjusted to the polymerization temperature. Process steps 1) and 2) consequently comprise the apportionment of mixtures A and B and are started by the beginning of the particular apportionment. Mixtures A and B are apportioned one after the other according to process steps 1) and 2), wherein apportionment of the one or more mixtures B is begun with process step 2), but at the earliest after completion of process step1a) in the most preferred embodiment, i.e. at the earliest once at least 90 wt.% of the monomers of mixture A have been polymerized to completion and the neutralization according to process step 1a) has been performed. The extent to which the polymerization has been taken to completion may readily be determined by determining the solids content. Apportionment of the at least one mixture B into the aqueous initial charge may thus begin in case of the most preferred embodiment at the earliest after apportionment of 90% of mixture A and the subsequent addition of the neutralizing agent in process step 1a), which corresponds to the case of a very high rate of polymerization with virtually instantaneous 100% polymerization conversion. In general, however, mixture A is initially apportioned in its entirety during process step 1), after which the neutralizing agent can be added once the mixture A monomers have been at least 90%, preferably completely, polymerized and only thereafter, during process step 2), is the at least one mixture B apportioned.

The acid groups of the polymer obtained in process step 1) and/or in process step 2) are neutralized using conventional basic neutralizing agents, such as ammonia and in particular amines and/or aminoalcohols such as, for example, triethylamine, dimethylisopropylamine, dimethylethanolamine, dimethylisopropanolamine and 2-amino-2-methyl-1-propanol.

The basic neutralizing agents are added in accordance with a degree of neutralization of, for example, 10 to 100%. A degree of neutralization of 100% here corresponds to a stoichiometric neutralization of each acid group in the polymer arising from mixture A and/or B. For example, the degree of neutralization is selected dependent on the solids content of the aqueous binder latex obtained after completion of the process and also dependent on the acid value of the corresponding monomer mixture. In general, a low degree of neutralization is selected in the case of elevated acid values and an elevated solids content and vice versa.

The term "mixture" used in connection with mixtures A and B does not exclude separate apportionment of the particular monomers, i.e. the monomers may also be apportioned individually or as two or more different mixtures of only some of the monomers. It is preferred, however, to apportion real mixtures A and B. Mixtures A and B may also be

apportioned in the form of pre-emulsions.

The ratio by weight of mixture A to the at least one mixture B is 15:85 to 85:15.

The polymerization process described above permits the production of aqueous (meth)acrylic latices with solids contents of, for example, 30 to 60 wt.%.

In the following the preparation of the most preferred embodiment of (meth)acrylic latex III) shall be described in more detail. Mixture A comprises at least one olefinically unsaturated, free-radically polymerizable monomer with at least one acid group, specifically in a proportion corresponding to an acid value of mixture I of 10 to 100 mg of KOH/g and 0.5 to 5 wt.% of at least one olefinically polyunsaturated, free-radically polymerizable monomer.

If mixture A contains at least one olefinically unsaturated, free-radically polymerizable monomer with at least one hydroxyl group, which may be advantageous, the proportion thereof in mixture A lie(s) in a range corresponding to a hydroxyl value of mixture I of below 60 mg of KOH/g, in particular of 5 to 30 mg of KOH/g.

For example, mixture A may consist of

a) 0.5 to 5 wt.% of at least one olefinically polyunsaturated, free-radically polymerizable monomer,

b) a proportion corresponding to an acid value of mixture A of 10 to 100 mg of KOH/g, for example, of above 1 to 20 wt.%, of at least one olefinically unsaturated, free-radically polymerizable monomer with at least one acid group,

c) 55 to below 98.5 wt.% of at least one olefinically unsaturated, free-radically polymerizable monomer without functional groups and

d) a proportion corresponding to a hydroxyl value of mixture A of 0 to below 60 mg of KOH/g, for example of 0 to 20 wt.%, of at least one olefinically unsaturated, free-radically polymerizable monomer with at least one hydroxyl group, wherein the weight percentages add up to 100 wt.%.

In particular, mixture I may consist of

a) 0.5 to 3 wt.% of at least one olefinically polyunsaturated, free-radically polymerizable monomer,

b) a proportion in the range from above 1 to 10 wt.% and simultaneously corresponding to an acid value of mixture I of 10 to 100 mg of KOH/g of at least one olefinically unsaturated, free-radically polymerizable monomer with at least one acid group,

c) 77 to below 97.5 wt.% of at least one olefinically unsaturated, free-radically polymerizable monomer without functional groups and

d) a proportion in the range from above 1 to 10 wt.% and simultaneously corresponding to a hydroxyl value of mixture A of 5 to 30 mg of KOH/g of at least one olefinically unsaturated, free-radically polymerizable monomer with at least one hydroxyl group, wherein the weight percentages add up to 100 wt.%.

The description mentions at least one mixture B. If more than one mixture B is used, these may be apportioned simultaneously or successively. Preferably, only a single mixture B is used, in which case the process is a two-stage emulsion polymerization, in which mixture A is polymerized in process step 1) and mixture B is polymerized in process step 2.)

The preferably only one, or in the case of two or more mixtures B, each of the mixtures B comprises at least one olefinically unsaturated, free-radically polymerizable monomer with at least one acid group in a proportion corresponding to an acid value of the mixture of below 5 mg of KOH/g, at least one olefinically unsaturated, free-radically polymerizable monomer with at least one hydroxyl group in a proportion corresponding to a hydroxyl value of the mixture of below 5 mg of KOH/g and 0.5 to 5 wt.% of at least one olefinically polyunsaturated, free-radically polymerizable monomer. Mixture B or the mixtures B preferably contain neither olefinically unsaturated, free-radically polymerizable monomers with at least one acid group nor olefinically unsaturated, free-radically polymerizable monomers with at least one hydroxyl group.

Examples of olefinically polyunsaturated, free-radically polymerizable monomers and of olefinically unsaturated, free-radically polymerizable monomers with at least one acid group or with at least one hydroxyl group are the same as those described already above.

Apart from the at least one olefinically polyunsaturated, free-radically polymerizable monomer and the possible, but preferably absent, olefinically unsaturated, free-radically polymerizable monomer with at least one acid group or with at least one hydroxyl group, the at least one mixture B contains at least one further olefinically unsaturated, free-radically

polymerizable monomer without functional groups. Examples of such non-functionalized olefinically unsaturated, free-radically polymerizable monomers are the same as those described already above.

For example, mixture B or each of the mixtures B may consist of

a) 0.5 to 5 wt.% of at least one olefinically polyunsaturated, free-radically polymerizable monomer,

b) a proportion corresponding to an acid value of mixture(s) B of 0 to below 5 mg of KOH/g, for example, of 0 to below 1 wt.%, of at least one olefinically unsaturated, free-radically polymerizable monomer with at least one acid group,

c) a proportion corresponding to a hydroxyl value of mixture(s) B of 0 to below 5 mg of KOH/g, for example, of 0 to below 2 wt.%, of at least one olefinically unsaturated, free-radically polymerizable monomer with at least one hydroxyl group and

d) above 92 to 99.5 wt.% of at least one olefinically unsaturated, free-radically polymerizable monomer without functional groups, wherein the weight percentages add up to 100 wt.%.

In particular, mixture B or each of the mixtures B may consist of

a) 0.5 to 3 wt.% of at least one olefinically polyunsaturated, free-radically polymerizable monomer and

b) 97 to 99.5 wt.% of at least one olefinically unsaturated, free-radically polymerizable monomer without functional groups, wherein the weight percentages add up to 100 wt.%.

The use of olefinically polyunsaturated monomers in all the stages of the emulsion polymerization according to the most preferred embodiment ensures that the polymer products formed in each stage of the emulsion polymerization exhibit a crosslinked or even a gel structure.

The polymerization process described above permits the production of aqueous (meth)acrylic latices with solids contents of, for example, 30 to 60 wt.%.

On the basis of electron micrographs of approx. 90 nm thick microtome sections of dried layers produced from the aqueous binder latices, it proved possible to establish that the individual latex particles of the most preferred (meth) acrylic latices in general have the structure of two directly interconnected bubbles, comparable with the appearance of the numeral 8.

The aqueous additive compositions containing layered silicate furthermore contain water and moreover optionally in addition organic solvents and/or conventional coating additives. The aqueous additive compositions containing layered silicate preferably contain 65.0 to 91.4 wt.% of water and optionally 0.1 to 10 wt.% of organic solvents, based on total amount of the aqueous additive composition.

The organic solvents are solvents conventionally used in coating techniques. These may originate from the preparation of the binders or are added separately. Examples of suitable solvents are monohydric or polyhydric alcohols, e.g., propanol, butanol, pentanol, hexanol; glycol ethers or esters, for example, diethylene glycol dialkyl ether, dipropylene glycol dialkyl ether, each with C1- to C6-alkyl, ethoxypropanol, butyl glycol; glycols, for example, ethylene glycol, propylene glycol, N-methyl pyrrolidone and ketones, e.g., methyl ethyl ketone, acetone, cyclohexanone; aromatic or aliphatic hydrocarbons, for example, toluene, xylene, or straight-chain or branched aliphatic C6-C12-hydrocarbons.

Conventional coating additives which may be present in the aqueous additive compositions containing layered silicate are in particular defoamers and surface-active additives.

The aqueous additive compositions containing layered silicate may accordingly contain so-called protective colloids which, as is known, may be used in order to ensure that the layered silicates can readily be incorporated into the water-based coating compositions. Examples of usable protective colloids are polypropylene oxides which may comprise, for example, up to 40 wt.% of ethylene oxide units. The polypropylene oxides may have molar masses of, for example, 400 to 950. Examples of usable polypropylene oxides are the commercial products Voranol P 400 (DOW Chemicals) and Pluriol P900 (BASF). The protective colloids are used, for example, in quantities of 1.0 to 10.0 wt.%, relative to the total quantity of the aqueous additive composition containing layered silicate.

The layered silicate containing aqueous additive compositions may also contain additional rheology control additives, others than the layered silicates. Rheology control additives conventionally used in water-based coatings can be used as additional rheology additives. Examples are synthetic polymers with ionic groups and/or groups having an associative effect such as polyvinyl alcohol, poly(meth)acrylamide, poly(meth)acrylic acid, styrene-maleic acid anhydride or ethylene-maleic acid anhydride copolymers and their derivatives as well as polyurethanes. Cross-linked polymer microparticles, such as described for example in EP-A-38 127, may further be used.

As already mentioned above the layered silicate containing aqueous additive compositions of the present invention can not be used themselves as water-based coating compositions. They do not contain all necessary components in the appropriate amounts of a ready-to use coating composition and in particular they have viscosities different from viscosities of usual waterborne base coat coating compositions. They have for example viscosities in the range of 2 - 35 mPas (measured at a shear rate of 235 $s^{-1}$ with HAAKE viscosimeter Typ RS1). They can be for example water-thin. Preferably the aqueous additive compositions are free of color-imparting and effect-imparting pigments and they are also preferably free of curing agents.

The amount of layered silicate in the layered silicate containing aqueous additive compositions and/or the amount of the layered silicate containing aqueous additive composition in the water-based coating composition can preferably be chosen such that a content of layered silicate (solid) of 0.05 to 0.5, preferably of 0.05 to 0.3 percent by weight, based on the total amount of the water-based coating composition, i.e. based on the total amount of the ready-to spray water-based coating composition, is obtained.

The aqueous additive compositions containing layered silicate according to the invention are stable in storage and may be stored without thickening and gelling, for example over a period of approx. 2 years without any problems. Prior art aqueous additive compositions containing layered silicate do not exhibit this long-term storage stability. They gel prematurely. While prior art compositions may indeed be re-liquefied by appropriate stirring, their rheological activity is then lost.

The aqueous additive compositions containing layered silicate are used for the production of color-imparting and/or special effect-imparting water-based coating compositions, in particular for the production of color-imparting and/or special effect-imparting water-based base coat coating compositions or water-based color-imparting and/or special effect-imparting one-layer top coat coating compositions in the context of single layer or multilayer coating. Color-imparting and/or special effect-imparting should here be taken to mean that the corresponding coating compositions contain only color-imparting pigments, only special effect-imparting pigments or color-imparting and special effect-imparting pigments. The coatings produced with these color-imparting and/or special effect-imparting coating compositions are here intended to impart a desired color, a desired special effect or a desired color in combination with a special effect to the substrate to be coated. The present invention thus also relates to the use of the aqueous additive compositions for production of water-based coating compositions, in particular for production of color-imparting and/or special effect-imparting water-based base coat coating compositions.

The present invention is also directed to a process for the production of water-based coating compositions containing layered silicate, in particular water-based base coat coating compositions, wherein the layered silicates are incorporated into the water-based coating composition in the form of the above-defined aqueous additive compositions containing layered silicate. The aqueous additive compositions containing layered silicate may here be incorporated into a finished water-based coating composition or into constituents thereof.

The aqueous additive compositions containing layered silicate are preferably added to an already completely formulated pigmented water-based coating composition, in particular a water-based base coat coating composition or water-based one-layer top coat coating composition. This may proceed, for example, by manual stirring or by shaking. The aqueous additive composition containing layered silicate is preferably incorporated into the pigmented water-based coating composition immediately before application. Due to its very good storage stability, the aqueous additive composition containing layered silicate may be produced as a semifinished product and stored until use. It may thus also be used, for example, as a component of a "paint mixing system", as is in particular used in vehicle repair coating for the production of color-imparting and/or special effect-imparting base coat coating compositions. As is known, such a paint mixing system is based on a defined number of individual mixing components containing coloring and/or special effect pigments and optionally further for example binder components, which can be mixed as required to yield a coating with the desired color/special effect.

It is, of course, also possible to incorporate the aqueous additive compositions containing layered silicate according to the invention during the production of an water-based coating composition produced from scratch. In principle, the water-based coating compositions containing the aqueous additive compositions also exhibit excellent storage stability of for example up to six months.

The water-based coating compositions containing the aqueous additive compositions contain the conventional constituents of a water-based pigmented base coat coating composition or one-layer top coat coating composition: color-imparting and/or special effect-imparting pigments, one or more binders and water and optionally at least one of the following constituents: crosslinking agents, fillers, conventional coating additives and organic solvents.

Examples of binders are conventional film-forming, water-dilutable binders familiar to the person skilled in the art, such as water-dilutable polyester resins, water-dilutable (meth)acrylic copolymer resins or water-dilutable polyester/(meth)acrylic copolymer hybrids and water-dilutable polyurethane resins or polyurethane/(meth)acrylic copolymer hybrids. These may be reactive or non-functional resins.

The water-based coating compositions may be self drying (physically drying), self crosslinking or externally crosslinking. Accordingly, the water-based coating compositions may contain crosslinking agents, such as, for example,

free or blocked polyisocyanates or amino resins, for example, melamine resins. Selection of the optionally used crosslinking agents depends on the type of crosslinkable groups in the binders and is familiar to the person skilled in the art. The crosslinking agents may be used individually or in combination. The mixing ratio of crosslinking agent solids to binder solids amounts, for example, to 10:90 to 40:60, preferably 20:80 to 30:70.

The water-based coating compositions contain conventional coating pigments, for example, special effect pigments (effect-imparting pigments) and/or color-imparting pigments selected from among white, colored and black pigments.

Examples of special effect pigments are conventional pigments which impart to a coating a special effect, e.g. a color and/or lightness flop dependent on the angle of observation, are metal pigments. Example of metal pigments are those made from aluminum, copper or other metals, interference pigments such as, for example, metal oxide coated metal pigments, for example, iron oxide coated aluminum, coated mica such as, for example, titanium dioxide coated mica, pigments which produce a graphite effect, iron oxide in flake form, liquid crystal pigments, coated aluminum oxide pigments, coated silicon dioxide pigments. Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, perylene pigments.

The water-based coating compositions may contain conventional coating additives in conventional quantities, for example, of 0.1 to 5 wt.%, relative to the solids content thereof. Examples are neutralizing agents, antifoaming agents, wetting agents, adhesion promoters, catalysts, levelling agents, anticratering agents, thickeners and light stabilizers.

The water-based coating compositions may contain conventional coating solvents, for example, in a proportion of preferably less than 20 wt.%, particularly preferably of less than 15 wt.%. These are conventional coating solvents, which may originate, for example, from the production of the binders or are added separately. Examples of such solvents are those mentioned already above in the description of the layered silicate containing compositions.,

Water-based coating compositions have solids contents of, for example, 10 to 45 wt.%, preferably of 15 to 35 wt.%. The ratio by weight of pigment content to the resin solids content is, for example, from 0.05:1 to 2:1. For special-effect water-based base coat coating compositions it is preferably 0.06:1 to 0.6:1 and for solid color (single-tone) water-based base coat coating compositions it is preferably higher, for example, 0.06:1 to 2:1, in each case relative to the weight of solids.

The water-based coating compositions have for example viscosities in the range of 50 to 300 mPas (measured at a shear rate of 235 $s^{-1}$ with HAAKE viscosimeter Typ RS1). These low viscous coating compositions can easier be filtered and applied compared to high viscous coating compositions.

The water-based coating compositions may be used for the production of a color- and/or special effect-imparting single-stage top coating layer within a one- or multilayer coating or preferably for the production of the color- and/or special effect-imparting coating layer within a base coat/clear coat two-layer coating. The water-borne base coating compositions or single-stage top coating compositions may be applied by conventional methods. They are preferably applied by spraying to a dry film thickness of, for example, 8 to 40 μm; for special-effect water-borne base coats the dry film thickness is, for example, 8 to 25 μm, while for solid color water-borne base coats it is preferably greater, for example, 10 to 40 μm. In case of basecoat/clear coat two-layer coating application preferably proceeds by the wet-on-wet process, i.e. after a flash-off phase, for example, at 20 to 80°C, the water-based base coat layers are overcoated with a clear coat to a dry film thickness of preferably 30 to 60 μm and dried or crosslinked together with the latter at temperatures of, for example, 20 to 150°C. Drying conditions are determined by the clear coat system used. Temperatures of 20 to 80°C are, for example, preferred for repair purposes, e.g. in vehicle coating. For the purposes of mass-production coating, e.g. in vehicle coating, temperatures of above 100°C, for example, of above 110°C, are preferred.

All known clear coats are in principle suitable as the clear coat. Usable clear coats are here both solvent-containing one-component (1 pack) or two-component (2 pack) clear coats, water-dilutable 1 pack or 2 pack clear coats, powder clear coats or aqueous powder clear coat slurries.

Multilayer coatings produced in this manner may be applied onto various types of substrate. The substrates are generally of metal or of plastics. These are often precoated, i.e. plastics substrates may, for example, be provided with a plastics primer, metallic substrates may have a primer layer or an electrophoretically applied primer and optionally additionally one or more further coating layers, such as, for example, a primer surfacer layer (filler layer). These layers are in general cured.

The water-based coating compositions according to the invention are suitable for automotive and industrial coating. In the automotive coating sector the coating compositions may be used both for OEM (Original Equipment Manufacture) automotive coating and for automotive and automotive part refinishing (refinishing of vehicle bodies and parts thereof). Stoving or baking temperatures from 80°C to 140°C, for example, preferably from 110°C to 130°C, are used for original automotive coating. Curing temperatures from 20°C to 80°C, for example, particularly from 40°C to 60°C are used for automotive refinishing. The coating compositions can also be used in coating large vehicles, such as, trucks, busses and railroad cars. In the latter case curing temperatures from 20°C to 80°C are preferably used.

Water-based coating compositions, in particular water-based base coat coating compositions, which contain the aqueous additive compositions according to the invention containing layered silicate exhibit very good storage stability and excellent spray application characteristics. They can be filtered without problems, which is in particular of great significance in vehicle repair coating, since the finished coatings produced from various components, for example in a paint shop, are subjected to pressureless filtration before application, in order, for example, to avoid the surface defects caused by excessively coarse particles remaining in the coating.

The water-based coating compositions containing the aqueous additive compositions containing layered silicate exhibit the expected rheological behavior. They are low viscous in the ready-to-spray state and resist sagging after application. They and exhibit very good alignment of flake-form special effect pigments and thus very good development of the special effect and the flop effect, both in water-based coating compositions pigmented with aluminum pigments and in those pigmented with pearlescent pigments. Thanks to the use of the aqueous additive compositions containing layered silicate, good wetting of the substrate by the corresponding water-based coating composition is generally achieved. Surface defects, such as hollows or craters, can thus be avoided.

The water-based coating compositions according to the invention moreover have the advantage that they can be applied without problem using two spray passes wet-on-wet, i.e. without intermediate drying between the individual spray passes, while obtaining an excellent metallic special effect. Without addition of the aqueous additive compositions containing layered silicate, comparably good development of the special effect can only be achieved with intermediate drying, which makes the application process less efficient overall.

The invention will be further described by reference to the following Examples. All parts and percentages are on a weight basis unless otherwise indicated.

## EXAMPLES

### Example 1

Preparation of a water-dilutable polyurethane resin (component II)

753 g of Desmophen C1200 from Bayer (polycarbonate diol), 69.7 g of dimethylol propionic acid, 44.7 g of triethylamin and 274 g of acetone were added to a reactor and heated to 40°C. 344 g of isophorone diisocyanate were added and the reaction was carried out at 50°C until the NCO value was constant. 1720 g of deionized water were then added to the reactor under vigorous stirring and immediately after a solution of 31 g of ethylene diamine in 280g of water was added. The acetone was removed from the dispersion by distillation under vacuum. A thin, whitish aqueous dispersion was obtained.
Solid content: 35 % by weight
Acid value: 25 mg KOH/g solids

### Example 2

Preparation of an aqueous (meth)acrylic latex (component III)

A reactor was charged with 688 parts by weight of deionized water and 16 parts by weight of Rhodapex EST30 (anionic surfactant available from Rhodia). The water and surfactant charge was heated to 80 °C under an inert atmosphere and held at that temperature throughout the reaction. A first stirred monomer emulsion of 316.5 parts by weight butyl acrylate, 316.5 parts by weight methyl methacrylate, 35.6 parts by weight hydroxyethyl acrylate, 35.6 parts by weight methacrylic acid, 7.14 parts by weight allyl methacrylate, 348.8 parts by weight deionized water, 44.8 parts by weight of Rhodapex EST30, and 3.2 parts by weight ammonium persulfate was slowly added to the charge in the reactor. After all of the first monomer emulsion was in, an additional 100.8 parts by weight of deionized water was added as a rinse. The contents of the reactor were held for an additional hour, during which a second stirred monomer emulsion of 377.4 parts by weight methyl methacrylate, 327.3 parts by weight butyl acrylate, 7.14 parts by weight allyl methacrylate, 378 parts by weight deionized water, 15.2 parts by weight of Rhodapex EST30, and 1.12 parts by weight ammonium persulfate was prepared and, separately, a solution of 12.9 parts by weight of aminomethylpropanol in 98 parts by weight of deionized water. The aminomethylpropanol solution was added slowly to the reaction mixture and then, the second monomer emulsion was added slowly to the reaction mixture. After the addition was complete, 70 parts by weight of deionized water was added as a rinse. The reaction emulsion was held for at least an additional hour. The emulsion was then cooled to less than 40° C.
Solids: 45 % by weight
Hydroxyl value: 12 mg KOH/g solids
Acid value: 16.5 mg KOH/g solids

Example 3

Preparation of a layered silicate containing aqueous additive composition A (Component I according to the invention)

An aqueous additive composition has been prepared by mixing together the following components:

Mixture 1: 34.1 parts by weight of deionized water have been mixed with 1.1 parts by weight of layered silicate (Laponite RD). 4.1 parts by weight of a polypropylene oxide (Voranol P400) have been added.
Mixture 2: Separately 14.6 parts by weight of deionized water have been mixed with 10.7 parts by weight of (meth) acrylic latex prepared in example 2.

Mixture 1 has been mixed with Mixture 2.
11.8 parts by weight deionized water, 20.6 parts by weight of the polyurethane resin prepared in example 1 and 3.0 parts by weight of N-Pentanol have been added.
Ratio by weight polyurethane (solid) to (meth)acrylic latex (solid): 60 to 40

Example 4

Preparation of a layered silicate containing aqueous additive composition B (component I according to the invention)

An aqueous additive composition has been prepared by mixing together the following components:

Mixture 1: according to Example 3
Mixture 2: Separately 14.6 parts by weight of deionized water have been mixed with 16.0 parts by weight of (meth) acrylic latex prepared in example 2.

Mixture 1 has been mixed with Mixture 2.
13.4 parts by weight deionized water, 13.7 parts by weight of the polyurethane resin prepared in example 1 and 3.0 parts by weight of N-Pentanol have been added.
Ratio by weight polyurethane (solid) to (meth)acrylic latex (solid): 40 to 60

Example 5 (comparative example)

Preparation of a comparative layered silicate containing aqueous additive composition C (without (meth)acrylic latex)

An aqueous additive composition has been prepared by mixing together the following components:

Mixture 1: according to Example 3.
Mixture 1 has been added into 22.9 parts by weight of deionized water.

Then 34.8 parts by weight of the polyurethane resin prepared in example 1 and 3.0 parts by weight of N-Pentanol have been added.

Example 6 (comparative example)

Preparation of a comparative layered silicate containing aqueous additive composition D (without polyurethane resin)

An aqueous additive composition has been prepared by mixing together the following components:

Mixture 1: according to Example 3.
Mixture 2: Separately 14.6 parts by weight of deionized water have been mixed with 26.7 parts by weight of the (meth)acrylic latex prepared in example 2.
Mixture 1 has been added to Mixture 2.
Then 16.4 parts by weight deionized water and 3.0 parts by weight of N-Pentanol have been added.

Paint Examples

Preparation of aqueous silver-metallic base coat coating compositions

An aqueous polyurethane dispersion 1 according to US5,556,912, preparative example 1, polyurethane dispersion A (based on a (meth)acrylated polyurethane resin) and an aqueous polyurethane dispersion 2 according to DE-A-43 44 063, preparative example 2, polyurethane dispersion B (based on an OH-functional polyurethane prepolymer which is chain extended with diisocyanate), have been used for preparing the aqueous base coat coating compositions.

An aqueous base coat coating composition has been prepared by mixing together the following components:

Mixture 1: The following components have been mixed:

3.7 parts by weight of butyl glycol
3.3 parts by weight of n-butanol
0.3 parts by weight of N-methylpyrrolidon
0.3 parts by weight of a commercially available wetting and dispersing agent (Additol XL 250, UCB-Group)
4.6 parts by weight of a commercially available passivated aluminium paste (Eckart)

Mixture 2: The following components have been mixed:

26.8 parts by weight of a polyurethane dispersion 1 (35% solids)
13.0 parts by weight of a polyurethane dispersion 2 (35% solids)
44.0 parts by weight of di.-water
1.7 parts by weight of a 10% solution of N,N,-dimethylethanolamine
2.3 parts by weight of a commercially available thickener (Viskalex HV30, Ciba)

Mixture 1 has been mixed into Mixture 2 to obtain the aqueous silver-metallic base coat coating composition.

The so obtained aqueous base coat coating composition has been mixed each with the aqueous additive compositions A, B, C and D to obtain coating compositions containing the layered silicate containing aqueous additive composition.

Paint A: 100 parts by weight of aqueous base coat coating composition have been mixed with 20 parts by weight of aqueous additive composition A (according to invention)
Paint B: 100 parts by weight of aqueous base coat coating composition have been mixed with 20 parts by weight of aqueous additive composition B (according to invention).
Paint C: 100 parts by weight of aqueous base coat coating composition have been mixed with 20 parts by weight of aqueous additive composition C (comparison).
Paint D: 100 parts by weight of aqueous base coat coating composition have been mixed with 20 parts by weight of aqueous additive composition D (comparison).

Application of Paints A, B, C and D

A commercially available solvent-based two-component primer surfacer (isocyanate-cross-linking) (Standox® 2K-Nonstop-Füllprimer, Standox® 2K-Härter) was applied to steel plates coated by cathodic electrodeposition coating in dry film thicknesses of about 60 $\mu$m, cured for 30 minutes at 60°C and subsequently sanded. Each of paints A, B, C and D were applied in two spraying passes wet-on-wet (without an intermediate flash-off phase between the two spraying passes) to the thus obtained primer surfacer layer in a dry film basecoat thickness totaling about 12$\mu$m.

The thus obtained water-based base coating layers were each subsequently coated over after a flash-off time of about 20 minutes with a commercially available two-component solvent-based clear coat (isocyanate-cross-linking) (Standocryl® 2K HS-Klarlack, Standox® 2K HS-Härter, long). After a flash-off time of 10 minutes the coating was cured for 30 minutes at 60°C.

Results

The technological results of the coatings prepared with paints A, B, C and D are shown in the Table below. For comparison the viscosity of aqueous additive compositions A, B, C and D have been measured and viscosity in the ready-to -spray state as well as the other technical parameters have been determined for the paint without the aqueous additive composition.

Table:

| | **Paint A** according to the invention | **Paint B** according to the invention | **Paint C** comparative example | **Paint D** comparative example | Paint without aqueous additive composition |
|---|---|---|---|---|---|
| Viscosity* at 235s-1 of aqueous additive composition only | 24.4 mPas | 32.4 mPas | 38.0 mPas | 32.3 mPas | |
| Viscosity** of aqueous additive composition only | 144 mPas | 664 mPas | 152 mPas | 1272 mPas | |
| Viscosity** of ready-to-spray paint | 720 mPas | 848 mPas | 544 mPas | 2636 mPas | 1240 mPas |
| Filterability | 88% | 87% | 89% | 17% | 91% |
| Flop Index | 12.6 | 13.0 | 10.9 | 12.7 | 8.9 |
| Sprayability | 8 | 8 | 7 | 3 | 8 |
| Substrate wetting/surface quality | 8 | 9 | 6 | 7 | 6 |
| Reduction of spray viscosity (compared with paint without aqueous additive composition) | minus 520 mPas | minus 392 mPas | minus 696 mPas | plus 1396 mPas | |
| * Viscosity measured with HAAKE viscosimeter Typ RS1<br>** Viscosity measured with Brookfield viscosimeter at 5rpm<br>*** Silver-metallic base coat coating composition as prepared above without aqueous additive composition | | | | | |

As can be seen in the Table filterability, sprayability, viscosity at the ready-to-spray state, flop index as well as surface quality of paints A and B according to the invention are superior to the comparative paints C and D. In particular, paint C while having an acceptable filterability and viscosity shows completely insufficient flop index as well as worse sprayability and surface quality. Also, paint D while having an acceptable flop index shows completely insufficient filterability, viscosity and sprayability as well as worse surface quality.

Methods:

1. Filtration

Filtration of a coating composition is a generally applied process step in a body shop prior to the application process. Therefore either paper strainers or gun cups with enclosed strainers for single use (e.g. SATA® RPS™) are used both with a nominal mesh size of approximately 125μm to 190μm (nominal).
Though the process of straining is important, it should be finished almost instantaneously after loading of the paper strainer and the spray gun respectively.
Is a special gun cup system with enclosed strainer used it of course should not slow down the fluid flow.
The filterability of the coating composition is measured by determination of the amount of coating composition that passes

a 125μm paper strainer within 30s. The initial amount of paint for loading the strainer is always 240g in approximately 1-3s. The result is expressed in percent.

2. Metallic effect: Determination and Definition of Flop Index

The Flop Index of each resultant coating has been determined as parameter to estimate the goodness of metallic flop effect. Therefore the coated panels have been measured with a photospectrometer and the flop index has been calculated according to the following description:

Flop Index is the measurement on the change in reflectance of a metallic color as it is rotated through the range of viewing angles. A Flop Index of 0 indicates a solid color, while a very high flop metallic or pearlescent basecoat/ clearcoat color may have a flop index of 15-17.

The light intensity (reflectance) L* has been measured at different viewing angles (15°, 45°, 110°) by using a spectral photometer type MA64-B from X-rite. The Flop Index has been calculated from the light intensity L* according to the following formula (Alman):

$$\text{Flop Index} = \frac{2.69(L^*_{15°} - L^*_{110°})^{1.11}}{(L^*_{45°})^{0.86}}$$

3. Sprayability

Sprayability is the perception of a sprayer how easy the paint can be applied on a panel with a size of 1x1m. The goodness is rated on a scale from 1 to 10 whereas 1 stands for totally unacceptable and 10 for perfect.

4. Substrate wetting and surface quality

The wetting of the substrate often influences the surface quality. Whereas a good wetting can improve the surface quality, however, a poor wetting can result in surface defects like dimples or poor levelling. The goodness (level of performance) is rated on a scale from 1 to 10 whereas 1 stands for totally unacceptable and 10 for perfect.

5. Rheology: Reduction of spray viscosity and shear thinning behaviour

A low viscous coating composition can easier be filtered and applied compared to a high viscous coating composition. Also a high shear thinning coating composition contributes to better sprayability. It is preferred to have both a low viscosity in general and a pseudoplastic rheology almost without yield point that leads to very low viscosity with high shear rates. The viscosities of paints A, B, C and D have been measured at the ready-to-spray state.

## Claims

**1.** Aqueous additive composition for production of water-based coating compositions comprising:

I) at least one layered silicate
II) at least one water-dilutable polyurethane resin and
III) at least one aqueous (meth)acrylic latex, wherein the aqueous (meth)acrylic latex is prepared by multistage emulsion polymerization in the aqueous phase, comprising the steps:

1) free-radical polymerization of a mixture A of olefinically unsaturated, free-radically polymerizable monomers, optionally comprising at least one monomer with at least one acid group and at least one olefinically polyunsaturated monomer, in the aqueous phase,
2) free-radical polymerization of at least one mixture B of olefinically unsaturated, free-radically polymerizable monomers, optionally comprising at least one monomer with at least one acid group and at least one olefinically polyunsaturated monomer, in the presence of the product obtained in process step 1),

wherein the ratio by weight of mixture A to the at least one mixture B is from 15:85 to 85:15 and wherein mixture A or the at least one mixture B or both mixture A and the at least one mixture B comprise the at least one monomer with at least one acid group and wherein mixture A or the at least one mixture B or both mixture A and the at least mixture B comprise the at least one olefinically polyunsaturated monomer,
wherein the at least one water-dilutable polyurethane resin II and the at least one aqueous (meth)acrylic latex III are present in a ratio by weight of polyurethane to (meth)acrylic latex of 1: 9 to 9: 1, wherein the ratio by weight is based on resin solids, and
wherein the aqueous additive composition contains 65.0 to 91.4 wt.% of water, based on the total amount of the aqueous additive composition.

**2.** The aqueous additive composition of claim 1 comprising:

I) at least one layered silicate
II) at least one water-dilutable polyurethane resin and
III) at least one aqueous (meth)acrylic latex, wherein the aqueous (meth)acrylic latex is prepared by multistage emulsion polymerization in the aqueous phase, comprising the steps:

1) free-radical polymerization of a mixture A of olefinically unsaturated, free-radically polymerizable monomers, comprising at least one monomer with at least one acid group in a proportion corresponding to an acid value of mixture A of 10 to 100 mg of KOH/g and optionally comprising at least one olefinically polyunsaturated monomer, in the aqueous phase,
2) free-radical polymerization of at least one mixture B of olefinically unsaturated, free-radically polymerizable monomers, comprising at least one monomer with at least one acid group in a proportion corresponding to an acid value of mixture B or each of the mixtures B of 0 to below 5 mg of KOH/g and optionally comprising at least one olefinically polyunsaturated monomer, in the presence of the product obtained in process step 2),

wherein the ratio by weight of mixture A to the at least one mixture B is from 15:85 to 85:15 and wherein mixture A or the at least one mixture B or both mixture A and the at least one mixture B comprise the at least one olefinically polyunsaturated monomer.

**3.** The aqueous additive composition of claim 2 comprising:

I) at least one layered silicate
II) at least one water-dilutable polyurethane resin and
III) at least one aqueous (meth)acrylic latex, wherein the aqueous (meth)acrylic latex is prepared by multistage emulsion polymerization in the aqueous phase, comprising the successive steps:

1) free-radical polymerization of a mixture A of olefinically unsaturated, free-radically polymerizable monomers, comprising at least one monomer with at least one acid group in a proportion corresponding to an acid value of mixture A of 10 to 100 mg of KOH/g and 0.5 to 5 wt.% of at least one olefinically polyunsaturated monomer, in the aqueous phase,
1a) neutralization of acid groups of the polymer formed in process step 1) and
2) free-radical polymerization of at least one mixture B of olefinically unsaturated, free-radically polymerizable monomers, comprising at least one monomer with at least one acid group in a proportion corresponding to an acid value of mixture B or each of the mixtures B of 0 to below 5 mg of KOH/g, at least one monomer with at least one hydroxyl group in a proportion corresponding to a hydroxyl value of mixture B or each of the mixtures B of 0 to below 5 mg of KOH/g and at least one olefinically polyunsaturated monomer in a proportion of 0.5 to 5 wt.%, relative to mixture B or each of the mixtures B, in the presence of the product obtained in process step 1a),

wherein the ratio by weight of mixture A to the at least one mixture B is from 15:85 to 85:15 and wherein neutralization is not begun in process step 1a) until at least 90 wt.% of the monomers of mixture A have been polymerized to completion.

**4.** The aqueous additive composition of any one of claims 1 to 3, wherein the at least one water-dilutable polyurethane resin II and the at least one aqueous (meth)acrylic latex III are present in a ratio by weight of polyurethane to (meth) acrylic latex of 1 : 5 to 4:1, wherein the ratio by weight is based on resin solids.

5. The aqueous additive composition of any one of claims 1 to 4, wherein the aqueous additive composition comprises 0.1 to 5.0 wt.% of the least one layered silicate I) and 3.0 to 30.0 wt.% of the at least one water-dilutable polyurethane resin II) and the at least one aqueous (meth)acrylic latex III, wherein the wt.% are relative to the total quantity of the aqueous additive composition and the wt.% of polyurethane II) and (meth)acrylic latex III) are based on resin solids.

6. The aqueous additive composition of claim 5, wherein the aqueous additive composition comprises 0.1 to 2.5 wt.% of the least one layered silicate I) and 8.0 to 15.0 wt.% of the at least one water-dilutable polyurethane resin II) and the at least one aqueous (meth)acrylic latex III, wherein the wt.% are relative to the total quantity of the aqueous additive composition and the wt.% of polyurethane II) and (meth)acrylic latex III) are based on resin solids.

7. Use of the additive composition of any one of claims 1 to 6 for production of water-based coating compositions.

8. Water-based coating composition comprising the aqueous additive composition of any one of claims 1 to 6.

9. Water-based coating composition of claim 8 comprising 0.05 to 0.5 wt.% of the layered silicate, based on the total amount of the water-based coating composition.

10. Water-based coating composition of claim 8 or 9, wherein the water-based coating composition is a base coat coating composition comprising effect-imparting and/or color-imparting pigments.

11. Process for the production of water-based coating composition containing layered silicates, wherein the layered silicates are incorporated into the water-based coating composition in form of the aqueous additive composition of any one of claims 1 to 6.

## Patentansprüche

1. Wässrige Zusatzstoffzusammensetzung zur Herstellung von Beschichtungszusammensetzungen auf Wasserbasis, wobei die Zusammensetzung aufweist:

   I) mindestens ein Schichtsilicat;
   II) mindestens ein wasserverdünnbares Polyurethanharz und
   III) mindestens einen wässrigen (Meth)acryllatex, wobei der wässrige (Meth)acryllatex durch mehrstufige Emulsionspolymerisation in der wässrigen Phase mit den folgenden Schritten hergestellt wird:

      1) radikalische Polymerisation eines Gemischs A aus olefinisch ungesättigten, radikalisch polymerisierbaren Monomeren, die wahlweise mindestens ein Monomer mit mindestens einer Säuregruppe und mindestens ein olefinisch mehrfach ungesättigtes Monomer aufweisen, in der wässrigen Phase,
      2) radikalische Polymerisation mindestens eines Gemischs B aus olefinisch ungesättigten, radikalisch polymerisierbaren Monomeren, die wahlweise mindestens ein Monomer mit mindestens einer Säuregruppe und mindestens ein olefinisch mehrfach ungesättigtes Monomer aufweisen, in Anwesenheit des im Verfahrensschritt 1) erhaltenen Produkts,

   wobei das Gewichtsverhältnis des Gemischs A zu dem mindestens einen Gemisch B 15:85 bis 85:15 beträgt, und wobei das Gemisch A oder das mindestens eine Gemisch B oder sowohl das Gemisch A als auch das mindestens eine Gemisch B das mindestens eine Monomer mit mindestens einer Säuregruppe aufweisen, und wobei das Gemisch A oder das mindestens eine Gemisch B oder sowohl das Gemisch A als auch das mindestens eine Gemisch B das mindestens eine olefinisch mehrfach ungesättigte Monomer aufweisen,
   wobei das mindestens eine wasserverdünnbare Polyurethanharz II und der mindestens eine wässrige (Meth)acryllatex III in einem Gewichtsverhältnis von Polyurethan zu (Meth)acryllatex von 1:9 bis 9:1 anwesend sind, wobei das Gewichtsverhältnis auf Harzfeststoffe bezogen ist, und
   wobei die wässrige Zusatzstoffzusammensetzung 65,0 bis 91,4 Gew.-% Wasser enthält, bezogen auf die Gesamtmenge der wässrigen Zusatzstoffzusammensetzung.

2. Wässrige Zusatzstoffzusammensetzung nach Anspruch 1, die aufweist:

   I) mindestens ein Schichtsilicat;
   II) mindestens ein wasserverdünnbares Polyurethanharz und

III) mindestens einen wässrigen (Meth)acryllatex, wobei der wässrige (Meth)acryllatex durch mehrstufige Emulsionspolymerisation in der wässrigen Phase mit den folgenden Schritten hergestellt wird:

1) radikalische Polymerisation eines Gemischs A aus olefinisch ungesättigten, radikalisch polymerisierbaren Monomeren, die mindestens ein Monomer mit mindestens einer Säuregruppe in einem Anteil, der einer Säurezahl des Gemischs A von 10 bis 100 mg KOH/g entspricht, und wahlweise mindestens ein olefinisch mehrfach ungesättigtes Monomer aufweisen, in der wässrigen Phase,
2) radikalische Polymerisation mindestens eines Gemischs B aus olefinisch ungesättigten, radikalisch polymerisierbaren Monomeren, die mindestens ein Monomer mit mindestens einer Säuregruppe in einem Anteil, der einer Säurezahl des Gemischs B oder jedes der Gemische B von 0 bis unter 5 mg KOH/g entspricht, und wahlweise mindestens ein olefinisch mehrfach ungesättigtes Monomer aufweisen, in Anwesenheit des im Verfahrensschritt 2) erhaltenen Produkts,

wobei das Gewichtsverhältnis des Gemischs A zu dem mindestens einen Gemisch B 15:85 bis 85:15 beträgt, und wobei das Gemisch A oder das mindestens eine Gemisch B oder sowohl das Gemisch A als auch das mindestens eine Gemisch B das mindestens eine olefinisch mehrfach ungesättigte Monomer aufweisen.

**3.** Wässrige Zusatzstoffzusammensetzung nach Anspruch 2, die aufweist:

I) mindestens ein Schichtsilicat;
II) mindestens ein wasserverdünnbares Polyurethanharz und
III) mindestens einen wässrigen (Meth)acryllatex, wobei der wässrige (Meth)acryllatex durch mehrstufige Emulsionspolymerisation in der wässrigen Phase mit den folgenden Schritten hergestellt wird:

1) radikalische Polymerisation eines Gemischs A aus olefinisch ungesättigten, radikalisch polymerisierbaren Monomeren, die mindestens ein Monomer mit mindestens einer Säuregruppe in einem Anteil, der einer Säurezahl des Gemischs A von 10 bis 100 mg KOH/g entspricht, und 0,5 bis 5 Gew.-% mindestens eines olefinisch mehrfach ungesättigten Monomers aufweisen, in der wässrigen Phase,
1a) Neutralisierung von Säuregruppen des im Verfahrensschritt 1) gebildeten Polymers, und
2) radikalische Polymerisation mindestens eines Gemischs B aus olefinisch ungesättigten, radikalisch polymerisierbaren Monomeren, die mindestens ein Monomer mit mindestens einer Säuregruppe in einem Anteil, der einer Säurezahl des Gemischs B oder jedes der Gemische B von 0 bis unter 5 mg KOH/g entspricht, mindestens ein Monomer mit mindestens einer Hydroxylgruppe in einem Anteil, der einer Hydroxylzahl des Gemischs B oder jeder der Gemische B von 0 bis unter 5 mg KOH/g entspricht, und mindestens ein olefinisch mehrfach ungesättigtes Monomer in einem Anteil von 0,5 bis 5 Gew.-%, aufweisen, bezogen auf das Gemisch B oder jedes der Gemische B, in Anwesenheit des im Verfahrensschritt 1a) erhaltenen Produkts,

wobei das Gewichtsverhältnis des Gemischs A zu dem mindestens einen Gemisch B 15:85 bis 85:15 beträgt, und wobei die Neutralisierung im Verfahrensschritt 1a) nicht begonnen wird, bis mindestens 90 Gew.-% der Monomere des Gemischs A fertig polymerisiert worden sind.

**4.** Wässrige Zusatzstoffzusammensetzung nach einem der Ansprüche 1 bis 3, wobei das mindestens eine wasserverdünnbare Polyurethanharz II und der mindestens eine wässrige (Meth)acryllatex III in einem Gewichtsverhältnis von Polyurethan zu (Meth)acryllatex von 1:5 bis 4:1 anwesend sind, wobei das Gewichtsverhältnis auf Harzfeststoffe bezogen ist.

**5.** Wässrige Zusatzstoffzusammensetzung nach einem der Ansprüche 1 bis 4, wobei die wässrige Zusatzstoffzusammensetzung 0,1 bis 5,0 Gew.-% des mindestens einen Schichtsilicats I) und 3,0 bis 30,0 Gew.-% des mindestens einen wasserverdünnbaren Polyurethanharzes II) und des mindestens einen wässrigen (Meth)acryllatex III aufweist, wobei die Gew.-% auf die Gesamtmenge der wässrigen Zusatzstoffzusammensetzung bezogen sind und die Gew.-% von Polyurethan II) und (Meth)acryllatex III) auf Harzfeststoffe bezogen sind.

**6.** Wässrige Zusatzstoffzusammensetzung nach Anspruch 5, wobei die wässrige Zusatzstoffzusammensetzung 0,1 bis 2,5 Gew.-% des mindestens einen Schichtsilicats I) und 8,0 bis 15,0 Gew.-% des mindestens einen wasserverdünnbaren Polyurethanharzes II) und des mindestens einen wässrigen (Meth)acryllatex III) aufweist, wobei die Gew.-% auf die Gesamtmenge der wässrigen Zusatzstoffzusammensetzung bezogen sind und die Gew.-% von Polyurethan II) und (Meth)acryllatex III) auf Harzfeststoffe bezogen sind.

7. Verwendung der Zusatzstoffzusammensetzung nach einem der Ansprüche 1 bis 6 zur Herstellung von Beschichtungszusammensetzungen auf Wasserbasis.

8. Beschichtungszusammensetzung auf Wasserbasis, welche die wässrige Zusatzstoffzusammensetzung nach einem der Ansprüche 1 bis 6 aufweist.

9. Beschichtungszusammensetzung auf Wasserbasis nach Anspruch 8, die 0,05 bis 0,5 Gew.-% des Schichtsilicats aufweist, bezogen auf die Gesamtmenge der Beschichtungszusammensetzung auf Wasserbasis.

10. Beschichtungszusammensetzung auf Wasserbasis nach Anspruch 8 oder 9, wobei die Beschichtungszusammensetzung auf Wasserbasis eine Beschichtungszusammensetzung für einen Grundanstrich ist, die effektgebende und/ oder farbgebende Pigmente aufweist.

11. Verfahren zur Herstellung einer Beschichtungszusammensetzung auf Wasserbasis, die Schichtsilicate enthält, wobei die Schichtsilicate der Beschichtungszusammensetzung auf Wasserbasis in Form der wässrigen Zusatzstoffzusammensetzung nach einem der Ansprüche 1 bis 6 beigemengt werden.

**Revendications**

1. Composition aqueuse d'additif pour la production de compositions de revêtement à base d'eau comprenant:

   I) au moins un silicate stratifié
   II) au moins une résine de polyuréthane pouvant être diluée dans l'eau et
   III) au moins un latex (méth)acrylique aqueux, le latex (méth)acrylique aqueux étant préparé par polymérisation en émulsion en plusieurs stades dans la phase aqueuse, comprenant les étapes de:

      1) polymérisation radicalaire d'un mélange A de monomères oléfiniquement insaturés, polymérisables de manière radicalaire, comprenant éventuellement au moins un monomère avec au moins un groupe acide et au moins un monomère oléfiniquement polyinsaturé, dans la phase aqueuse,
      2) polymérisation radicalaire d'au moins un mélange B de monomères polymérisables de manière radicalaire, oléfiniquement insaturés, éventuellement comprenant au moins un monomère avec au moins un groupe acide et au moins un monomère oléfiniquement polyinsaturé, en la présence du produit obtenu dans l'étape 1) du procédé,

   dans laquelle le rapport en poids du mélange A audit au moins un mélange B est de 15:85 à 85:15 et dans lequel le mélange A ou le au moins un mélange B ou à la fois le mélange A et le au moins un mélange B comprennent le au moins un monomère avec au moins un groupe acide et dans lequel le mélange A ou le au moins un mélange B ou à la fois le mélange A et le au moins un mélange B comprennent le au moins un monomère oléfiniquement polyinsaturé,
   dans lequel la au moins une résine de polyuréthane pouvant être diluée dans l'eau II et le au moins un latex (méth) acrylique aqueux III sont présents sous un rapport en poids du polyuréthane au latex (méth)acrylique de 1:9 à 9:1, dans lequel le rapport en poids est basé sur les matières solides de type résine, et
   dans lequel la composition aqueuse d'additif contient 65,0 à 91,4 % en pds d'eau, sur la base de la quantité totale de la composition aqueuse d'additif.

2. Composition aqueuse d'additif selon la revendication 1, comprenant:

   I) au moins un silicate stratifié
   II) au moins une résine de polyuréthane pouvant être diluée dans l'eau et
   III) au moins un latex (méth)acrylique aqueux, le latex (méth)acrylique aqueux étant préparé par polymérisation en émulsion en plusieurs stades dans la phase aqueuse, comprenant les étapes de:

      1) polymérisation radicalaire d'un mélange A de monomères oléfiniquement insaturés, polymérisables de manière radicalaire, comprenant au moins un monomère avec au moins un groupe acide en une proportion correspondant à un indice d'acidité du mélange A de 10 à 100 mg de KOH/g et éventuellement comprenant au moins un monomère oléfiniquement polyinsaturé, dans la phase aqueuse,
      2) polymérisation radicalaire d'au moins un mélange B de monomères oléfiniquement insaturés, polymérisés

de manière radicalaire, comprenant au moins un monomère avec au moins un groupe acide en une proportion correspondant à un indice d'acidité du mélange B ou de chacun des mélanges B de 0 à en dessous de 5 mg de KOH/g et comprenant éventuellement au moins un monomère oléfiniquement polyinsaturé, en la présence du produit obtenu dans l'étape 2) du procédé,

dans lequel le rapport en poids du mélange A sur le au moins un mélange B est de 15:85 à 85:15 et dans lequel le mélange A ou le au moins un mélange B ou à la fois le mélange A et le au moins un mélange B comprennent le au moins un monomère oléfiniquement polyinsaturé.

**3.** Composition aqueuse d'additif selon la revendication 2 comprenant:

I) au moins un silicate stratifié
II) au moins une résine de polyuréthane pouvant être diluée dans l'eau et
III) au moins un latex (méth)acrylique aqueux, le latex (méth)acrylique étant préparé par polymérisation en émulsion en plusieurs stades dans la phase aqueuse, comprenant les étapes successives de:

1) polymérisation radicalaire d'un mélange A de monomères oléfiniquement insaturés, polymérisables de manière radicalaire, comprenant au moins un monomère avec au moins un groupe acide en une proportion correspondant à un indice d'acidité du mélange A de 10 à 100 mg de KOH/g et 0,5 à 5 % en pds d'au moins un monomère oléfiniquement polyinsaturé, dans la phase aqueuse,
1a) neutralisation des groupes acides du polymère formé dans l'étape 1) du procédé et
2) polymérisation radicalaire d'au moins un mélange B de monomères oléfiniquement insaturés, polymérisables de manière radicalaire, comprenant au moins un monomère avec au moins un groupe acide en une proportion correspondant à un indice d'acidité du mélange B ou de chacun des mélanges B de 0 à en dessous de 5 mg de KOH/g, d'au moins un monomère avec au moins un groupe hydroxyle en une proportion correspondant à un indice de groupes hydroxyle du mélange B ou de chacun des mélanges B de 0 à en dessous de 5 mg de KOH/g et d'au moins un monomère oléfiniquement polyinsaturé en une proportion de 0,5 à 5 % en pds, par rapport au mélange B ou à chacun des mélanges B, en la présence du produit obtenu dans l'étape 1a) du procédé,

dans laquelle le rapport en poids du mélange A sur le au moins un mélange B est de 15:85 à 85:15 et dans laquelle la neutralisation n'a pas commencé à l'étape 1a) du procédé jusqu'à ce qu'au moins 90 % en pds des monomères du mélange A aient été polymérisés jusqu'à l'achèvement.

**4.** Composition aqueuse d'additif selon l'une quelconque des revendications 1 à 3, dans laquelle la au moins une résine de polyuréthane pouvant être diluée dans l'eau II et le au moins un latex (méth)acrylique aqueux III sont présents sous un rapport en poids du polyuréthane au latex (méth)acrylique de 1:5 à 4:1, le rapport en poids étant basé sur les matières solides de type résine.

**5.** Composition aqueuse d'additif selon l'une quelconque des revendications 1 à 4, dans laquelle la composition aqueuse d'additif comprend 0,1 à 5,0 % en pds du au moins un silicate stratifié I) et 3,0 à 30,0 % en pds de la au moins une résine de polyuréthane pouvant être diluée dans l'eau II) et du au moins un latex (méth)acrylique aqueux III, les pourcentages en pds étant donnés par rapport à la quantité totale de la composition aqueuse d'additif et les pourcentages en pds du polyuréthane II) et du latex (méth)acrylique III) étant basés sur les matières solides de type résine.

**6.** Composition aqueuse d'additif selon la revendication 5, dans laquelle la composition aqueuse d'additif comprend 0,1 à 2,5 % en pds du au moins un silicate stratifié I) et 8,0 à 15,0 % en pds de la au moins une résine de polyuréthane pouvant être diluée dans l'eau II) et du au moins un latex (méth)acrylique aqueux III, les pourcentages en pds étant donnés par rapport à la quantité totale de la composition aqueuse d'additif et les pourcentages en pds du polyuréthane II) et du latex (méth)acrylique III) étant basés sur les matières solides de type résine.

**7.** Utilisation de la composition d'additif selon l'une quelconque des revendications 1 à 6 pour la production de compositions de revêtement à base d'eau.

**8.** Composition de revêtement à base d'eau comprenant la composition aqueuse d'additif selon l'une quelconque des revendications 1 à 6.

**9.** Composition de revêtement à base d'eau selon la revendication 8, comprenant 0,05 à 0,5 % en pds du silicate stratifié, sur la base de la quantité totale de la composition de revêtement à base d'eau.

**10.** Composition de revêtement à base d'eau selon la revendication 8 ou 9, la composition de revêtement à base d'eau étant une composition de revêtement de couche de fond comprenant des pigments conférant un effet et/ou conférant une couleur.

**11.** Procédé de production de la composition de revêtement à base d'eau contenant des silicates stratifiés, les silicates stratifiés étant incorporés dans la composition de revêtement à base d'eau sous la forme de la composition aqueuse d'additif selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 281936 A
- EP 730626 A
- EP 1152041 A
- US 5185387 A
- US 5502101 A
- US 5492961 A
- US 5141987 A
- US 5556912 A
- DE 4115042 A
- US 5635559 A
- US 5691425 A
- DE 4228510 A
- US 5854337 A
- US 4489135 A
- EP 38127 A
- DE 4344063 A